# EUROPÄISCHE PATENTANMELDUNG

(11) **EP 1 640 192 A2**
(43) Veröffentlichungstag der Anmeldung: **29.03.2006**
(21) Anmeldenummer: 05019612.0
(22) Anmeldetag: 09.09.2005
(51) Int. Cl.: B60G 11/27, B60G 13/00

(54) **Aus Luftfeder und Stossdämpfer gebildetes Federbein für Fahrzeuge**

(30) Priorität: 24.09.2004 DE 102004046682
(71) Anmelder: ZF FRIEDRICHSHAFEN AG, 88046 Friedrichshafen (DE)
(72) Erfinder: Eichhorn, Martin, 97526 Sennfeld (DE); Füller, Christian, 97506 Grafenrheinfeld (DE)

(57) **Zusammenfassung**

Anschlussgelenkanordnung, umfassend ein Stützelement, das zwischen zueinander beweglichen Baugruppen angeordnet ist, wobei dieses Stützelement einen Tragkörper aufweist, der über ein Stiftgelenk in Verbindung mit einem Anschlusselement mit der zu stützenden Baugruppe in Wirkverbindung steht, wobei dem Stiftgelenk in funktionaler Reihenanordnung mindestens ein Schwenklager zugeordnet ist.

## Beschreibung

Die Erfindung betrifft eine Anschlussgelenkanordnung gemäß dem Oberbegriff von Patentanspruch 1.

Bei Achselementen wie einem Schwingungsdämpfer oder einer Luftfeder oder einer Kombination aus beiden werden Anschlussgelenkanordnungen eingesetzt, um eine kardanische Bewegung des Rades und/oder der Achse bezogen auf einen Fahrzeugaufbau zu ermöglichen.

Die DE 197 55 549 C2 zeigt eine Luftfeder in Kombination mit einem Schwingungsdämpfer. Eine Kolbenstange des Schwingungsdämpfers ist über ein Stiftgelenk mit einer Anschlussplatte der Luftfeder verbunden. Die Anschlussplatte wiederum ist starr mit einem zu tragenden Element, z. B. einem Fahrzeugaufbau oder einer Fahrerhauskabine verbunden. Die gesamte kardanische Beweglichkeit wird von dem Stiftgelenk erzeugt, das eine Federhülse aufweist, die auf der Kolbenstange axial verspannt wird und sich oberhalb und unterhalb der Anschlussplatte abstützt. Die Federhülse muss axial Kräfte, aber auch Querkräfte abstützen. Bei der Auslegung der Federhülse treten dann Zielkonflikte zwischen den Anforderungen hinsichtlich Kraftabstützung und Fahrkomfort auf.

Die DE 100 03 045 C2 offenbart eine Luftfeder in Kombination mit einem Schwingungsdämpfer, dessen Kolbenstange starr mit einer Luftfederkappe verbunden ist und zu einem abzudämpfenden Bauteil ein Schwenklager aufweist. Ein derartiges Schwenklager ist insbesondere im Hinblick auf Winkelbewegung innerhalb einer definierten Ebene vorteilhaft. In einem geringeren Maße besteht auch eine Winkelbeweglichkeit in einer Querachse zum Schwenklager.

Aufgabe der vorliegenden Erfindung ist es, eine Anschlussgelenkanordnung zu realisieren, die einen besonderen Komfort und vielfältige Auslegungsmöglichkeiten hinsichtlich der Beweglichkeit bietet.

Erfindungsgemäß wird die Aufgabe dadurch gelöst, dass dem Stiftgelenk in funktionaler Reihenanordnung mindestens ein Schwenklager zugeordnet ist.

Der große Vorteil der Erfindung besteht darin, das jeweils die Einzelvorteile des Stiftgelenks und des mindestens einen Schwenklagers genutzt werden können und in der Kombination der Einzelgelenke eine sehr zielgerichtet gefederte Anschlussgelenkanordnung vorliegt. So soll das Stiftgelenk vornehmlich vertikale Federbewegungen ausführen, hingegen die Schwenklager die Schwenkbewegungen möglichst reibungsarm zulassen. Bei einem gewöhnlichen Stiftgelenk wird die kardanische Bewegungsfreiheit angestrebt und bei Schwenklagern im Fahrzeugbau soll auch an Vertikalfederungseigenschaft vorliegen.

In weiterer vorteilhafter Ausgestaltung ist das Stiftgelenk räumlich versetzt zu dem mindestens einen Schwenklager angeordnet. Damit ergibt sich eine kompakte Bauweise.

Im Hinblick auf eine Vermeidung von Kippmomenten, die auf das Stützelement einwirken könnten, bildet die Schwenkachse des Schwenklagers mit der Hauptachse des Stiftgelenks einen Schnittpunkt.

Mit dem Ziel einer einfachen und raumsparende Konstruktion ' trägt das Anschlusselement das mindestens eine Schwenklager.

Alternativ besteht die Möglichkeit, dass das Anschlusselement mindestens ein Schwenklagerstützelement trägt. Man kann z. B. vorsehen, dass an einer zu tragende Baugruppe Schwenklager vorgesehen sind, und das Schwenklagerstützelement mit einem Haltebolzen die Kraft von dem Anschlusselement über das Schwenklager auf die zu tragen Baugruppe leitet.

Es hat sich als günstig erwiesen, wenn das Schwenklagerstützelement als eine u-förmige Lasche ausgeführt ist, die das Schwenklager aufnimmt.

Um eine möglichst beschränkte Winkelbeweglichkeit des Stiftgelenks zuzulassen, weist das Anschlusselement erfindungsgemäß einen Abstandshülsenabschnitt für Federkörper des Stiftgelenks auf. Der Abstandshülsenabschnitt trägt zwei beabstandete Federkörper, die aufgrund der Entfernung zueinander zwar eine unveränderte Federrate in Axialrichtung aufweisen, jedoch im Vergleich zu einem Stiftgelenk ohne Abstandshülsenabschnitt eine deutlich geringere Winkelbeweglichkeit zulässt.

Gemäß einem vorteilhaften Unteranspruch weist das Anschlusselement eine Aufnahmeöffnung für das Stiftgelenk auf. Bei einem Stützelement in der Bauform einer Luftfeder kann das Stiftgelenk eine Dichtfunktion übernehmen. Des weiteren ergibt sich insgesamt eine einfache Ausgestaltung für das Anschlusselement.

In weiterer vorteilhafter Ausgestaltung liegt zwischen dem Anschlusselement und dem Tragkörper des Stützelements ein Ringspalt vor. Dieser Ringspalt bestimmt die kardanische Beweglichkeit des Stiftgelenks unabhängig von der Federrate der Federkörper des Stiftgelenks.

Zur radialen Zentrierung des Stiftgelenks zum Anschlusselement ist in dem Ringspalt ein radial elastischer Ring eingelegt. Durch die Wahl der Federrate des elastischen Rings besteht ein weiterer Parameter zur Einstellung der kardanischen Beweglichkeit des Stiftgelenks.

Anhand der folgenden Figurenbeschreibung soll die Erfindung näher erläutert werden.

Es zeigt:
- Fig. 1: Anschlussgelenklageranordnung in Schnittdarstellung in Verbindung mit einer Luftfeder als Stützelement
- Fig. 2: Perspektivische Darstellung zu Fig. 1
- Fig. 3: Anschlussgelenklageranordnung in Schnittdarstellung mit beschränkter kardanischer Beweglichkeit
- Fig. 4: Perspektivische Darstellung zu Fig. 3

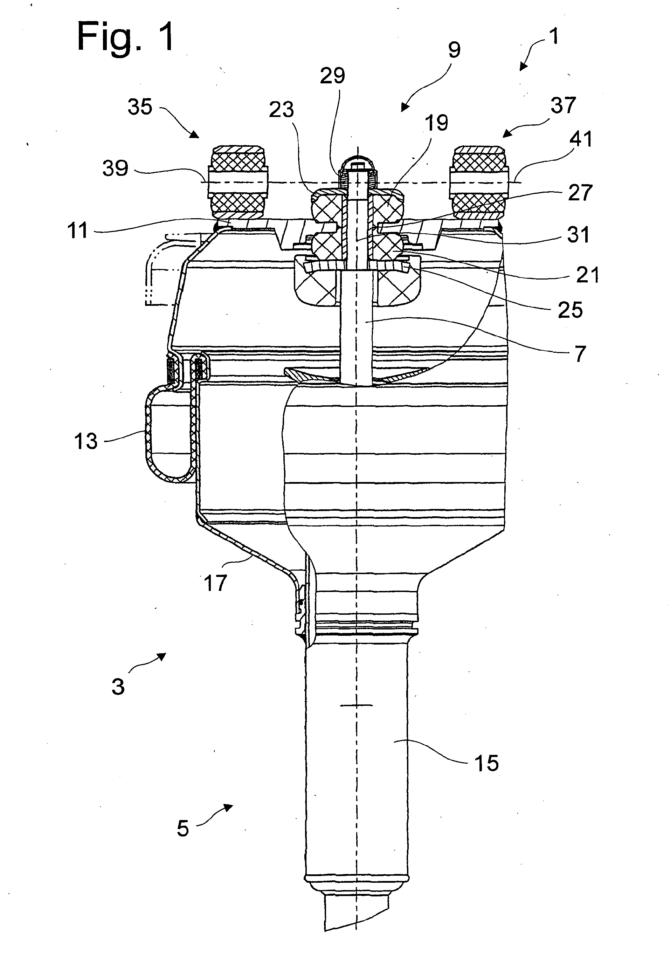

Die Fig. 1 zeigt eine Schnittdarstellung durch eine Anschlussgelenklageranordnung 1 in Kombination mit einer Luftfeder als Stützelement 3 zwischen zueinander beweglichen Baugruppen, wie z. B. einer Fahrzeugachse und einem Fahrzeugaufbau. Das Stützelement umfasst einen an sich bekannten Schwingungsdämpfer 5 mit einer axial beweglichen Kolbenstange 7 als Tragkörper. Der Tragkörper steht über ein Stiftgelenk 9 in Wirkverbindung mit einem Anschlusselement 11, das zusammen mit einem Rollbalg 13 und einem am Zylinder 15 des Schwingungsdämpfers 5 befestigten Abrollrohr 17 eine Luftfeder bildet.

Das Stiftgelenk 9 umfasst zwei ringförmige Federkörper 19; 21, die jeweils einseitig mit einer Deckscheibe 23; 25 versehen sind. Zwischen den Federkörpern 19; 21 greift das Anschlusselement 11, das eine Aufnahmeöffnung 27 für das Stiftgelenk 9 aufweist, an, so dass die Kolbenstange 7 in Grenzen eine Winkelbewegung zu dem Anschlusselement 11 ausführen kann. Über eine Schraubverbindung 29 wird das Stiftgelenk axial vorgespannt. Des weiteren ermöglichen die Federkörper eine Federbewegung der Kolbenstange auf einer Hauptachse des Stiftgelenks, die mit der Längsachse der Kolbenstange deckungsgleich verläuft. Ein von dem Anschlusselement, dem Rollbalg und dem Abrollrohr 13 gebildeter Federraum 33 der Luftfeder wird von dem Stiftgelenk 9 druckdicht verschlossen.

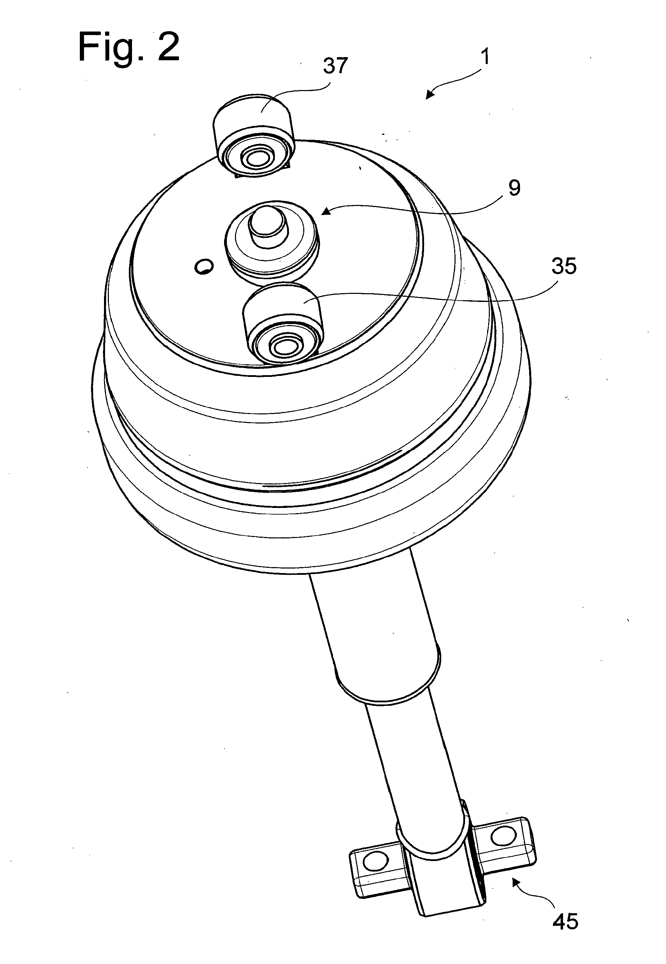

Des weiteren verfügt die Anschlussgelenklageranordnung 1 über mindestens ein Schwenklager 35; 37, das in funktionaler Reihenanordnung zu dem Stiftgelenk 9 zugeordnet ist. Die Hauptachse 31 des Stiftgelenks 9 verläuft räumlich versetzt zu dem mindesten einen Schwenklager 35; 37, so dass insgesamt eine kompakte Anordnung im Bereich der Einzellager vorliegt. In diesem Ausführungsbeispiel kommen zwei Schwenklager 35; 37 zur Anwendung deren Schwenkachsen 39; 41 mit der Hauptachse 31 des Stiftgelenks 9 einen Schnittpunkt 43 bilden. Dieses Merkmal wird in der Zusammenschau der Fig. 1 und Fig. 2 deutlich. Des weiteren werden die Schwenklager 35; 37 oberseitig von dem Anschlusselement 11 getragen. Zwischen den Schwenklagern und der zu stützenden Baugruppe besteht eine nicht dargestellte Haltebolzen-Verbindung.

Bei einer Federungsbewegung des Stützelements, bei der ein unteres Anschlussorgan 45 zu der Anschlussgelenklageranordnung 1 eine räumliche Bewegung ausführt, übernehmen die Schwenklager 35; 37 einen Bewegungsanteil bezogen auf die Schwenkachsen 39 41 und das Stiftgelenk 9 eine definierte Vertikalbewegung. Durch diese Aufspaltung der räumlichen Bewegung innerhalb der Anschlussgelenklageranordnung können die Federraten und Federwege unabhängig voneinander auf die gewünschten Kriterien abgestimmt werden.

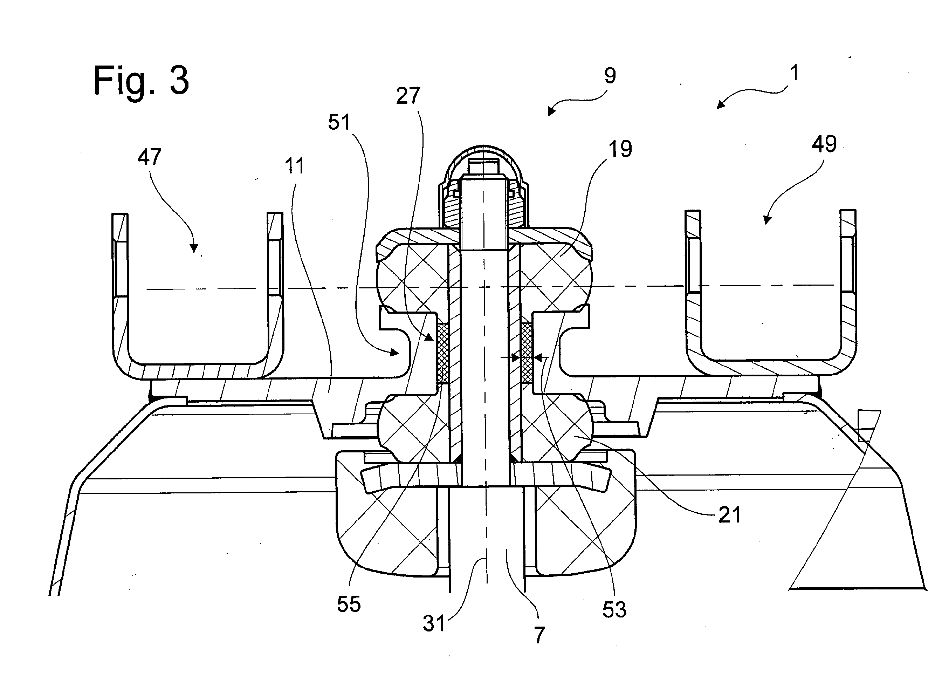

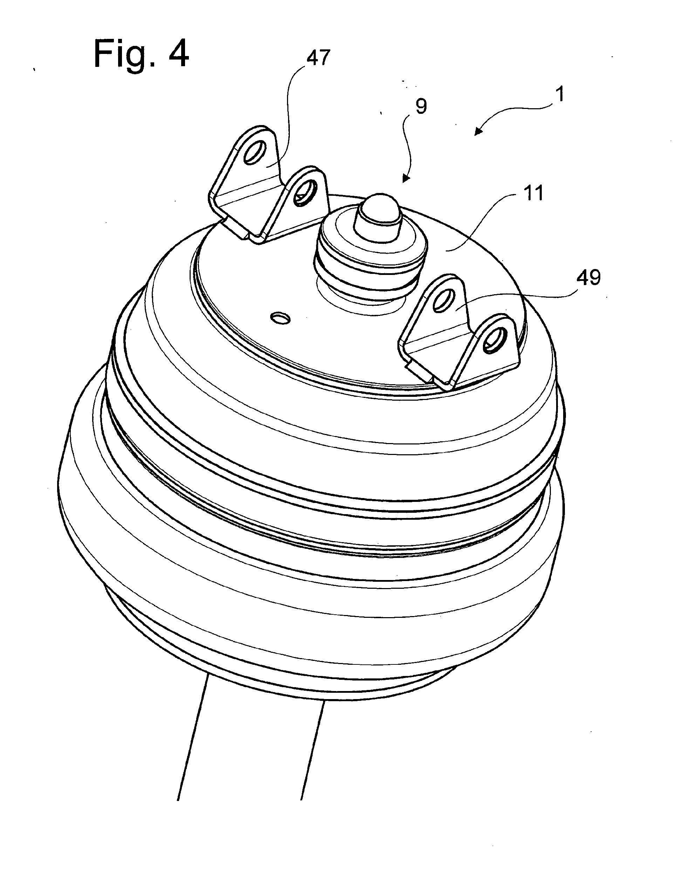

Die Fig. 3 und 4 stellen zu den Fig. 1 und 2 eine Abwandlung einer Anschlussgelenkanordnung dar, bei der anstelle der Schwenklager 35; 37 lediglich Schwenklagerstützelement 47; 49 in der Ausführung von u-förmigen Laschen von dem Anschlusselement getragen werden. Das Schwenklager selbst ist an der zu stützenden Baugruppe angeordnet.

Die Fig. 3 offenbart noch eine weitere erfinderische Lösung, die auch unabhängig von der Reihenanordnung eines Stiftgelenks 9 in Kombination mit mindestens einem Schwenklager 35; 37 einsetzbar ist.

Wie bereits zu Fig. 1 ausgeführt wurde, verfügt das Anschlusselement 11 über eine Aufnahmeöffnung 27 für das Stiftgelenk 9. Die Aufnahmeöffnung 27 wird von einem Abstandshülsenabschnitt 51 des Anschlusselements 11 gebildet, das die Federkörper 19; 21 im Vergleich zur Ausführung nach Fig. 1 auf einen deutlich vergrößerten Abstand hält. Des weiteren liegt zwischen der Kolbenstange 7 bzw. dem Tragkörper und der Aufnahmeöffnung 27 ein Ringspalt 53 vor. Die Ringspaltbreite, der Abstand der Federkörper und die Federraten der Federkörper stehen als Parameter zur Bestimmung einer gezielt eingeschränkten Winkelbeweglichkeit des Stiftgelenks 9 zur Verfügung. Andererseits besteht die Möglichkeit einer sehr weichen Federung entlang der Hauptachse 31 des Stiftgelenks 9.

Zusätzlich kann in dem Ringspalt 53 zwischen dem Tragkörper 7 und dem Anschlusselement 11 ein zumindest radial elastischer Ring 55 eingelegt sein. Durch die Wahl des Werkstoffes kann man einen.weiteren Parameter zur Bestimmung der Winkelbeweglichkeit des Stiftgelenks 9 nutzen.

## Patentansprüche

1. Anschlussgelenkanordnung, umfassend ein Stützelement, das zwischen zueinander beweglichen Baugruppen angeordnet ist, wobei dieses Stützelement einen Tragkörper aufweist, der über ein Stiftgelenk in Verbindung mit einem Anschlusselement mit der zu stützenden Baugruppe in Wirkverbindung steht,
**dadurch gekennzeichnet,**
**dass** dem Stiftgelenk (9) in funktionaler Reihenanordnung mindestens ein Schwenklager (35; 37) zugeordnet ist.

2. Anschlussgelenkanordnung nach Anspruch 1,
**dadurch gekennzeichnet,**
**dass** eine Hauptachse (31) des Stiftgelenks (9) räumlich versetzt zu dem mindestens einen Schwenklager (35; 37) angeordnet ist.

3. Anschlussgelenkanordnung nach Anspruch 1,
**dadurch gekennzeichnet,**
**dass** die Schwenkachse (39; 41) des Schwenklagers (35; 37) mit der Hauptachse (31) des Stiftgelenks (9) einen Schnittpunkt (43) bildet.

4. Anschlussgelenkanordnung nach Anspruch 1,
**dadurch gekennzeichnet,**
**dass** das Anschlusselement (11) das mindestens eine Schwenklager (35; 37) trägt.

5. Anschlussgelenkanordnung nach Anspruch 1,
**dadurch gekennzeichnet,**
**dass** das Anschlusselement (11) mindestens ein Schwenklagerstützelement (47; 49) trägt.

6. Anschlussgelenkanordnung nach Anspruch 5,
**dadurch gekennzeichnet,**
**dass** das Schwenklagerstützelement (47; 49) als eine u-förmige Lasche ausgeführt ist, die das Schwenklager aufnimmt.

7. Anschlussgelenkanordnung nach dem Oberbegriff von Patentanspruch 1,
**dadurch gekennzeichnet,**
**dass** das Anschlusselement (11) einen Abstandshülsenabschnitt (51) für Federkörper (19; 21) des,Stiftgelenks (9) aufweist.

8. Anschlussgelenkanordnung nach den Ansprüchen 1 oder 7,
**dadurch gekennzeichnet,**
**dass** das Anschlusselement (11) eine Aufnahmeöffnung (27) für das Stiftgelenk (9) aufweist..

9. Anschlussgelenkanordnung nach Anspruch 8,
**dadurch gekennzeichnet,**
**dass** zwischen dem Anschlusselement (11) und dem Tragkörper (7) des Stützelements ein Ringspalt (53) vorliegt.

10. Anschlussgelenkanordnung nach Anspruch 9,
**dadurch gekennzeichnet,**
**dass** in dem Ringspalt (53) ein radial elastischer Ring (55) eingelegt ist.
